# EUROPÄISCHE PATENTSCHRIFT

(11) **EP 1 194 204 B1**
(45) Veröffentlichungstag und Bekanntmachung des Hinweises auf die Patenterteilung: **27.11.2002**
(21) Anmeldenummer: 00951396.1
(22) Anmeldetag: 18.07.2000
(51) Int. Cl.: B01D 29/11

(54) **FILTERELEMENT MIT GEPRÄGTEM SCHWEISSVERBINDUNGSCLIP UND VORRICHTUNG ZUM HERSTELLEN DESSELBEN**
FILTER ELEMENT COMPRISING AN EMBOSSED WELD CONNECTION CLIP AND DEVICE FOR PRODUCING THE SAME
ELEMENT FILTRANT POURVU D'UNE PINCE D'ASSEMBLAGE A EMPREINTE, ET DISPOSITIF POUR PRODUIRE UN TEL ELEMENT

(30) Priorität: 20.07.1999 DE 19933163
(43) Veröffentlichungstag der Anmeldung: 10.04.2002
(73) Patentinhaber: Hydac Filtertechnik GmbH, 66280 Sulzbach/Saar (DE)
(72) Erfinder: LANG, Jürgen, 66280 Sulzbach-Altenwald (DE); MEES, Harald, 66822 Lebach (DE); SAKRASCHINSKY, Michael, 66388 St. Ingbert (DE)
(74) Vertreter: Bartels, Martin Erich Arthur
(86) Internationale Anmeldenummer: EP0006845
(87) Internationale Veröffentlichungsnummer: WO01005483

(56) Entgegenhaltungen:
- EP-B- 0 001 407
- EP-B- 0 695 211
- WO-A-99/10080
- US-A- 3 692 184
- US-A- 4 588 464

## Beschreibung

Die Erfindung betrifft ein rohrförmiges Filterelement zur Filtration von Fluiden mit einer Filtermatte, deren einander zugewandten Enden in ihrer Lage über eine Verbindungseinrichtung fixiert sind, die die Enden zumindest teilweise übergreift, wobei die Verbindungseinrichtung aus einem thermisch verformbaren Kunststoff bestehend mit den Enden der Filtermatte verschweißt ist, wobei die Verbindungseinrichtung als Verbindungsleiste ausgebildet in der Art eines Clips auf die Filtermattenenden aufgeschoben diese für einen thermischen Schweißvorgang aneinanderhält und wobei ohne Schweißzusatz der Clip im angeschmolzenen Zustand sich mit den Filtermattenenden verbindet.

Derartige Filterelemente dienen zur Filtration von Flüssigkeiten, beispielsweise in Form von Hydrauliköl oder von Lösungen jedweder Art, beispielsweise in Form von echten Suspensionen, Dispersionen, Emulsionen oder kolloiden Lösungen, und haben sich wegen ihrer kompakten Bauweise und ihrer großen Filterfläche allgemein bewährt. Um sicherzustellen, daß der Fluidstrom nur durch das eigentliche Filtermedium hindurchgeführt wird, bildet neben der Abdichtung an den beiden Endkappen die Verbindungsstelle der beiden einander zugewandten Enden der Filtermatte in Form von Endstegen eine der kritischen Stellen, die leckdicht zu schließen sind.
Die bekannten Filterelemente, wie sie auf dem Markt frei erhältlich sind, weisen eine unter Umständen aus verschiedenen Filtermaterialien zusammengesetzte zick-zack-förmig gefaltete oder plissierte Filtermatte auf, die um ein massives, im Inneren des Filterelementes angeordnetes, mit Durchlässen versehenes Stützrohr herumgelegt ist und die als Schutz vor Beschädigungen von außen in ein feinmaschiges Drahtgewebe eingefaßt ist, das dem Faltenverlauf der Filtermatte folgt. Bei einem Teil der bekannten Filterelemente wird die angesprochene Verbindungsstelle der beiden Filtermattenenden ebenso wie die Verbindung der Filtermatte mit den Endkappen über ein Klebstoffbett, beispielsweise mittels Epoxidharzklebstoff, erreicht, wobei jedoch in Abhängigkeit des eingesetzten Klebstoffes bei der Weiterverarbeitung oder Weiterverwendung des Filterelementes Wartezeiten entstehen, bis der Klebstoff aufgrund seiner Gelierzeiten belastungsfähig und nach seiner Härtezeit weiterverwendet werden kann.

Bei einem bekannten rohrförmigen Filterelement nach der EP 0 695 211 B1 ist aus Gründen einer verbesserten Handhabung und einer möglichen erhöhten Belastbarkeit die Filtermatte auf ihrer äußeren Seite von einem Streckmetallmantel umgeben, der mit einer geringen Maschenweite die Filtermatte schützt, wobei wiederum in einem Klebstoffbett, beispielsweise gebildet durch einen Zweikomponenten-Klebstoff, die einander zugewandten und abgekanteten Enden des Streckmetallmantels eingebettet sind, die die Enden der Filtermatte zwischen sich aufnehmen, wobei als weitere Begrenzung für das Klebstoffbett eine wannenartige Klammer vorgesehen sein kann aus Metall, in die die Enden von Filtermatte und Streckmetallmantel zum Herstellen der Verbindungsstelle eingreifen. Auch bei dieser Lösung sind die Gelier- und Aushärtezeiten des jeweils eingesetzten Klebstoffes bei der Weiterverarbeitung des Filterelementes zu berücksichtigen.

Im übrigen verlangt der Einsatz von Klebstoffen als Verbindungseinrichtung für die Filtermattenenden von der Vorrichtungsseite her spezielle Einrichtungen, die beispielsweise ein ungewolltes Abfließen des Klebstoffes aus der Verbindungsnaht verhindern, deren Handhabung aufwendig ist, was mit erhöhten Herstellkosten einhergeht.

Demgemäß wurde bei einem gattungsgemäßen rohrförmigen Filterelement nach der EP-B-0 001 407 bereits vorgeschlagen, die Filtermattenenden über einen als Verbindungseinrichtung ausgebildeten Längsnahtclip miteinander zu verschweißen, um derart die genannten Klebstoffe und den damit einhergehenden Fertigungsaufwand zu vermeiden. Die freien Schenkel des bekannten Clips sind elastisch nachgiebig ausgebildet, so daß diese sich beim Einschieben der Filtermattenenden aufweiten können und auf diese dann einen für die Festlegung notwendigen Anpreßdruck ausüben. An der Stelle des Übergangs der beiden freien Schenkel des Längsnahtclips bildet dieser eine Art Anschlag aus, gegen den die freien Enden der Filtermattenenden anstoßen und/oder in Einschubrichtung in den Clip begrenzt sind, so daß die Filtermattenenden bündig miteinander abschließen und die für das Herstellen der Schweißverbindung benötigte definierte Position einnehmen, so daß es dahingehend nicht zu einem Ausschuß kommen kann. Es hat sich jedoch gezeigt, daß insbesondere bei hoch beanspruchten Filterelementen die dahingehende Schweißnahtverbindung aufreißen und zu einem Versagen des Filterelementes oder sogar einer hydraulischen Anlage führen kann, in die das dahingehende Filterelement eingesetzt ist.

Ausgehend von diesem Stand der Technik liegt der Erfindung die Aufgabe zugrunde, ein rohrförmiges Filterelement sowie eine Vorrichtung zum Herstellen desselben zur Verfügung zu stellen, die wie bei den bekannten Lösungen eine Verbindung der Filtermatten sicherstellt; die gleichzeitig aber auch unter Vermeidung von Klebstoffen den Fertigungsaufwand und mithin die Herstellkosten reduzieren sowie zu funktionssicheren Verbindungsstellen auch bei höchster Belastung führen. Eine dahingehende Aufgabe löst ein rohrförmiges Filterelement mit den Merkmalen des Anspruches 1 sowie eine Vorrichtung zum Herstellen desselben mit den Merkmalen des Anspruches 9.

Dadurch, daß gemäß dem kennzeichnenden Teil des Anspruches 1 der Kunststoffclip als Teil der Verbindungseinrichtung zumindest entlang einer seiner beiden Schenkel beim thermischen Schweißen eine Prägung derart erhält, daß die Filtermattenenden in verdichteter Form miteinander verschweißt sind, ist auf diese Art und Weise eine besonders feste und dauerhafte Verbindung der Filtermattenenden erreichbar, selbst wenn diese sehr hohen Fluiddrücken bei der Filtration ausgesetzt sein sollten. Im übrigen kann bei der dahingehenden Ausgestaltung auf das teure und aufwendige Verkleben vollständig verzichtet werden. Da sich der Schweißvorgang in äußerst kurzer Zeit bei gleichzeitigem Einbringen der Prägung bis zum tatsächlichen Herstellende durchführen läßt, ist eine rationelle Fertigung ohne Verwendung zusätzlicher Epoxidharzklebstoffe od.dgl. möglich, so daß auch keine Stand- oder Gelierzeiten entstehen und das Element sofort einsetzbar ist oder direkt weiter verarbeitet werden kann. Dadurch, daß die erfindungsgemäße Vorrichtung zum Herstellen des dahingehenden Filterelementes eine Ultraschall-Schweißeinrichtung einsetzt mit einer leistenförmigen Sonotrode oder einem leistenförmigen Amboß, der zumindest mit der Prägeeinrichtung für die Prägung des jeweiligen Schenkels der Verbindungseinrichtung versehen ist, ist ein energetisch besonders günstiger Verbindungsvorgang gewährleistet.

Bei einer bevorzugten Ausführungsform des erfindungsgemäßen Filterelementes weist die Filtermatte zumindest außenumfangsseitig ein Kunststoffgewebe und/oder ein Metalldrahtgewebe auf, wobei der die Filtermattenenden zusammen mit dem jeweiligen Gewebe umfassende Kunststoffclip derart die Prägung erhält, daß diese in die Gewebestruktur des Gewebes eingreift. Hierdurch ist ein besonders sicherer und lang anhaltender Verbund zwischen den Filtermattenelementen gewährleistet. Vorzugsweise besteht dabei die Prägung aus rechteckförmigen, insbesondere quadratischen Prägeelementen, die vorzugsweise der jeweiligen Gewebestruktur entsprechen. Damit kann die jeweilige aus verschweißtem Kunststoffmaterial bestehende Einprägung in die freien Zwischenabstände in der Gewebestruktur eingreifen, um derart eine feste Verbindung zu gewährleisten. Sofern das Gewebe aus Kunststoffmaterial besteht, wird das dahingehende Gewebematerial unmittelbar mit dem Prägematerial der jeweiligen Einprägung schweißend verbunden.

Bei einer weiteren bevorzugten Ausführungsform des erfindungsgemäßen Filterelementes besteht die Verbindungseinrichtung aus einem Polyamid- oder Polyesterwerkstoff. Bei den dahingehend thermisch verformbaren Kunststoffen läßt sich ein gutes Schweißergebnis erzielen.

Bei einer weiteren bevorzugten Ausführungsform des erfindungsgemäßen Filterelementes ist die Filtermatte zick-zack-förmig gefaltet und hat einen Schichtaufbau, wobei als Schichten mindestens ein Polyestervlies und/oder eine Glasfasermatte und/oder ein Papiervlies und/oder ein Meltblownvlies und/oder ein Edelstahl-Polyester-Mischgewebe oder das Kunststoffgewebe und/oder das Metalldrahtgewebe vorgesehen sind. Durch diesen Mehrschichtenaufbau ist ein besonders gutes Filtrierergebnis und eine Anpaßbarkeit des Filterelementes an den jeweiligen Filtrierzweck erreichbar, ohne daß über die Schweißnahtverbindung der dahingehende Filtrierbetrieb beeinträchtigt wäre.

Weitere vorteilhafte Ausgestaltungen sind Gegenstand der sonstigen Unteransprüche.

Im folgenden werden das erfindungsgemäße Filterelement sowie die Vorrichtung zur Herstellung desselben anhand einer Ausführungsform nach der Zeichnung näher erläutert.
Es zeigen in prinzipieller und nicht maßstäblicher Darstellung die
- Fig.1: in perspektivischer Ansicht die Filtermatte mit dem Verbindungsclip, ungeschweißt;
- Fig.2: einen Bildausschnitt der Filtermatte mit Verbindungsclip nach der Fig.1, ungeschweißt;
- Fig.3: teilweise in Ansicht, teilweise im Schnitt dargestellt die stirnseitige Ansicht des Filterelementes;
- Fig.4: in perspektivischer Darstellung die wesentlichen Bestandteile der Vorrichtung zum Herstellen der Schweißverbindung;
- Fig.5: die mit der Vorrichtung nach der Fig.4 speziell herstellbare Schweißnahtausbildung mittels des Verbindungsclips.

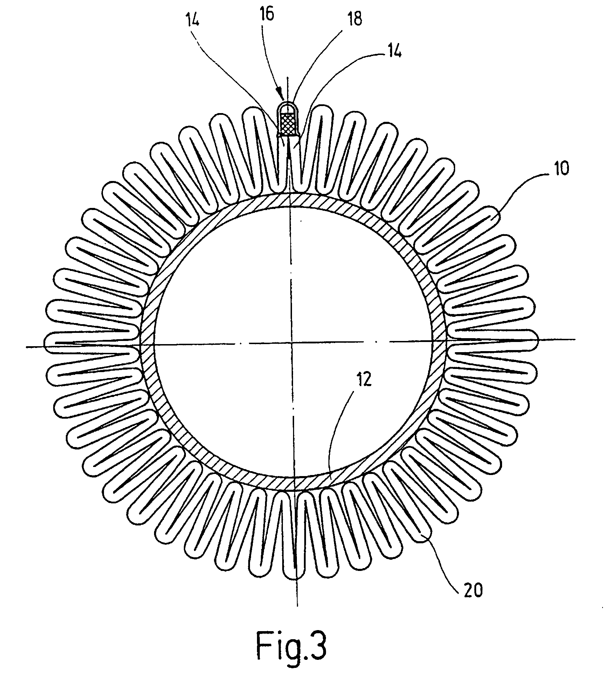

Das rohrförmige Filterelement ist in stirnseitiger Ansicht in der Fig.3 dargestellt. Es dient zur Filtration von Fluiden und weist eine zick-zack-förmig oder plissiert gefaltete Filtermatte 10 auf. Die Filtermatte 10 ist, was nicht näher dargestellt ist, mehrschichtig aufgebaut und kann beispielsweise von außen nach innen folgenden Schichtaufbau aufweisen:
1. Metalldrahtgewebe oder Kunststoffgewebe oder Kunststoffgitter mit Netzstruktur,
2. Polyestervlies,
3. Glasfasermatte oder Meltblownvlies,
4. Glasfasermatte oder Meltblownvlies,
5. Papiervlies oder Polyestervlies,
6. Edelstahl-Polyester-Mischgewebe,
7. Metalldrahtgewebe oder Kunststoffgewebe oder Kunststoffgitter mit Netzstruktur.

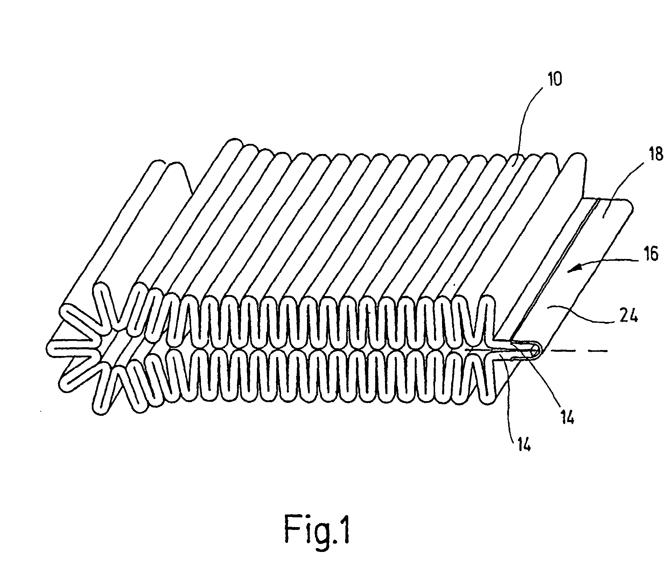

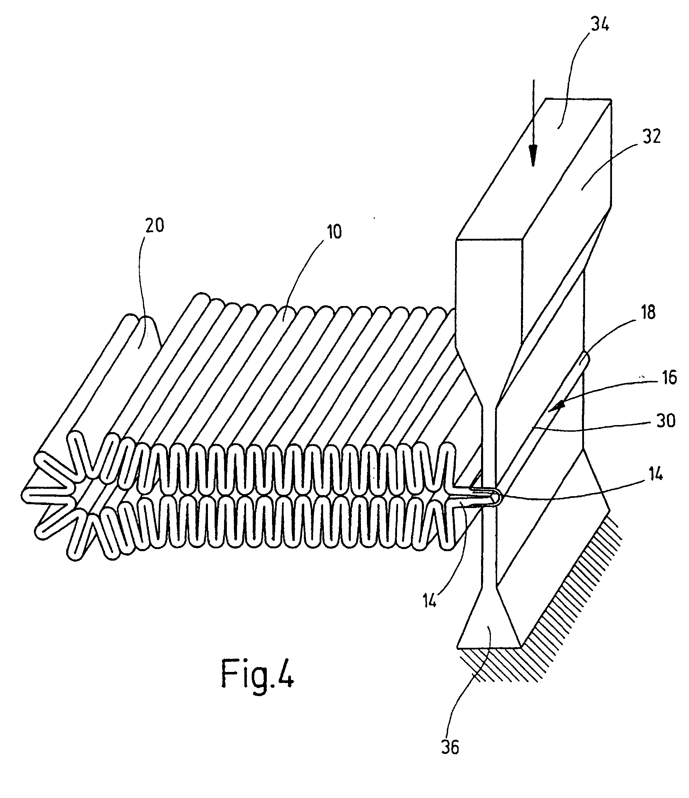

Zur Abstützung der Filtermatte 10 ist im Inneren des Filterelementes ein metallisches Stützrohr 12 vorgesehen, das mit Fluiddurchlässen (nicht dargestellt) versehen ist. Die beiden einander zugewandten Enden 14 der Filtermatte 10 laufen in einem spitzen Winkel aufeinander zu und ihre Länge ist etwas kürzer gehalten als die Länge der benachbart angeordneten Falten der Filtermatte 10. Aufgrund der eingesetzten Schichtmaterialien ist die rohrförmige Filtermatte 10 nachgiebig und die plissierten Filterbahnen können beispielsweise aufeinandergelegt werden, wie dies in den Fig.1 und 4 beispielhaft dargestellt ist. Das Stützrohr 12 gibt mithin der Filtermatte 10 einen gewissen Halt und definiert deren Position im späteren Filterelement. Eine als Ganzes mit 16 bezeichnete Verbindungseinrichtung fixiert die einander zugewandten Enden 14 der Filtermatte 10, wobei die Verbindungseinrichtung 16, wie die Figuren zeigen, die Enden 14 zumindest teilweise von ihrem freien Ende her übergreift. Die Verbindungseinrichtung 16 ist als Verbindungsleiste in der Art eines Clips 18 ausgebildet, der auf die Filtermattenenden 14 aufgeschoben diese für einen thermischen Schweißvorgang aneinanderhält, wobei ohne Schweißzusatz der Clip 18 im angeschmolzenen Zustand sich mit den Filtermattenenden 14 unlösbar verbindet. Die Verbindungseinrichtung 16 in Form des Verbindungsclips 18 besteht vorzugsweise aus einem Polyamid- oder Polyesterwerkstoff, die gute thermische Schweißeigenschaften aufweisen.

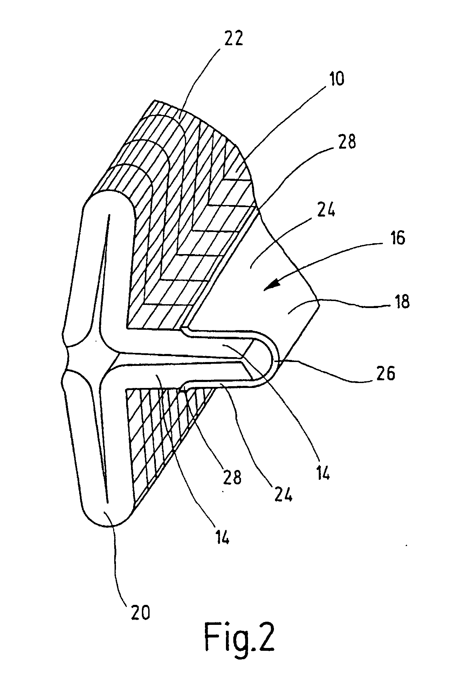

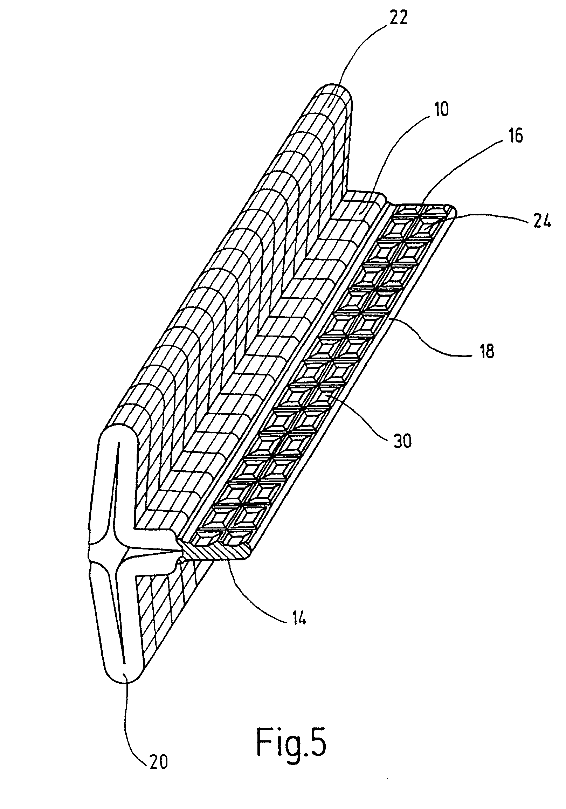

In den Figuren sind die einzelnen Schichten der Filtermatte 10 der einfacheren Darstellung wegen als Schichteneinheit 20 dargestellt, wobei in den Fig. 2 und 5 das zu äußerst liegende gitterartige Metalldrahtgewebe mit 22 bezeichnet ist. Wie insbesondere die Fig.1 und 2 zeigen, wird der Kunststoff oder Verbindungsclip 18 mit seinen beiden freien Umfassungsschenkeln 24 auf die freien Schenkel bzw. freien Enden 14 der Filtermatte 10 aufgeschoben und hält diese aufgrund seiner Eigenelastizität zusammen. Die beiden Umfassungsschenkel 24 des Clips 18 sind über ein bogenartiges Verbindungsstück 26 miteinander verbunden, wobei das Verbindungsstück 26 aufgrund der in diesem Bereich aufeinander zu laufenden Umfassungsschenkel 24 eine definierte Anlage bildet für die freien Enden 14 der Filtermatte 10. Auf diese Art und Weise ist gewährleistet, daß die beiden Enden 14 in etwa gleicher Höhe enden und in definierter Anlage zueinander gelangen für den später vorgesehenen, noch zu beschreibenden Schweißvorgang. Aufgrund der Eigenelastizität des Clips 18 kann diese definierte Anlagemöglichkeit bereits im Bereich der Umfassungsschenkel 24 gegeben sein und nicht erst im bogenförmigen Anlagegrund des Verbindungsstückes 26. Der Kunststoffclip 18 ist dahingehend optimiert, daß die freie Einschuböffnung für die Filtermattenenden 14 etwas kleiner gehalten ist als die Breite der beiden übereinanderliegenden Filtermattenenden 14, so daß aufgrund des Kunststoffelastizitätsverhaltens des Clips 18 eine anpressende Anlage der freien Filtermattenenden 14 aneinander erfolgt. Besonders kostengünstig läßt sich der Clip 18 dadurch herstellen, daß er vergleichbar der Filtermatte 10 aus aufgefalteten oder plissierten Bögen besteht, die voneinander getrennt dann jeweils einen Längsclip 18 ergeben. Um die Einschubmöglichkeit der Filtermattenenden 14 nicht zu beeinträchtigen, ist darüber hinaus vorgesehen, daß der Clip 18 im Bereich der freien Enden der beiden Umfassungsschenkel 24 mit einer nach außen weisenden bogenförmigen Einführhilfe 28 versehen ist.

Mit dem Schweißvorgang wird der Kunststoffclip 18 thermisch verformt und ist dann mit einer Prägung 30 (vgl. Fig.5) versehen, die der gitterartigen Gewebestruktur des Metalldrahtgewebes 22 im wesentlichen entspricht, d.h. das thermisch verformte Kunststoffmaterial des Clips 18 dringt in die freien Abstände innerhalb der Drahtgitterstruktur ein, so daß ein besonders fester Verbund erreicht ist, was noch weiter dadurch unterstützt wird, daß die Schichteneinheit 20, die zumindest teilweise gleichfalls Kunststoffmaterialien aufweist, mit verschweißt ist. Vorzugsweise wird für das Verschweißen der Filtermattenenden 14 mit der Verbindungseinrichtung 16 ein Ultraschall-Schweißverfahren eingesetzt, wobei jedoch auch andere thermische Schweißverfahren einsetzbar sind. Wie insbesondere die Fig.3 zeigt, sind die Längenverhältnisse jedenfalls im Bereich der Verbindungsnaht derart gewählt, daß die Verbindungseinrichtung 16 in radialer Richtung gesehen entlang des radialen Außenumfanges der Filtermatte 10 endet. Die Filtermattenenden 14 sind also im angeschmolzenen Zustand des Clips 18 derart in diesen eingebettet, daß eine unlösbare permanente Verbindung für die spätere Filtration mit der Filtermatte 10 bzw. mit dem Filterelement entsteht. Die angesprochene Prägung 30 kann entlang eines Umfassungsschenkels 24 oder entlang von beiden Umfassungsschenkeln 24 erfolgen.

In der Fig.4 ist nunmehr die Ultraschall-Schweißeinrichtung 32 dargestellt, mit der sich der thermische Schweißvorgang durchführen läßt. Die Ultraschall-Schweißeinrichtung weist dabei eine leistenförmige Sonotrode 34 und einen leistenförmigen Amboß 36 auf. Der Amboß 36 innerhalb der Ultraschall-Schweißeinrichtung 32 ist dabei im wesentlichen feststehend angeordnet, wobei die Sonotrode 34 für einen Schweißvorgang in Richtung des Pfeiles innerhalb der Fig.4 von einer Ausgangsstellung in Richtung auf das Schweißgut in Form des Längsnahtclips 18 für einen Schweißvorgang bewegbar ist. Für den Schweißvorgang wird die Filtermatte 10 mit ihren Filterfalten, wie in der Fig.4 angegeben, aneinandergelegt und nach Aufschieben des Clips 18 dann das Verschweißen der Filtermattenenden 14 mit dem Clip 18 vorgenommen. Der dahingehende Schweißvorgang läßt sich durch Handhabungshilfen erleichtern. Es ist aber auch möglich, von Hand die Filtermatte 10 der Schweißeinrichtung 32 zuzuführen. Nach Beendigung des Schweißvorganges wird die Sonotrode 34 wieder abgehoben und es ergibt sich dann eine Schweißnahtausbildung nach der Fig.5. Die Filtermatte 10 wird dann in eine rohrförmige Ausbildung gebracht und auf das Stützrohr 12 für die weitere Komplementierung zum Filterelement zusammengesetzt.

Durch das Schweißverfahren wird eine Schweißkantenversiegelung zum Verhindern von Fasermigration erreicht, so daß beispielsweise Glasfasern des Filtermediums in der Filtermatte 10 zurückgehalten sind. Der Clip 18 ist im Hinblick auf die benötigte Kunststoffmenge derart dimensioniert, daß sich jedenfalls ohne Schweißzusatz die Verbindungsnaht herstellen läßt. Mit der erfindungsgemäßen Filtermatte sowie mit der Vorrichtung zum Herstellen derselben ist ein rationelles Fertigen ohne Verwendung von Verbindungsklebstoff, wie Epoxidharzklebstoff, möglich, so daß für das Aushärten des Klebstoffes keine Wartezeiten entstehen und die Filtermatte bzw. das Filterelement direkt weiterverarbeitbar ist.

## Patentansprüche

1. Rohrförmiges Filterelement zur Filtration von Fluiden mit einer Filtermatte (10), deren einander zugewandten Enden (14) in ihrer Lage über eine Verbindungseinrichtung (16) fixiert sind, die die Enden (14) zumindest teilweise übergreift, wobei die Verbindungseinrichtung (16) aus einem thermisch verformbaren Kunststoff bestehend mit den Enden (14) der Filtermatte (10) verschweißt ist, wobei die Verbindungseinrichtung (16) als Verbindungsleiste ausgebildet in der Art eines Clips (18) auf die Filtermattenenden (14) aufgeschoben diese für einen thermischen Schweißvorgang aneinanderhält und wobei ohne Schweißzusatz der Clip (18) im angeschmolzenen Zustand sich mit den Filtermattenenden (14) verbindet, **dadurch gekennzeichnet, daß** der Kunststoffclip (18) zumindest entlang einer seiner beiden Schenkel (24) beim thermischen Schweißen eine Prägung derart erhält, daß die Filtermattenenden (14) in verdichteter Form miteinander verschweißt sind.

2. Filterelement nach Anspruch 1, **dadurch gekennzeichnet, daß** die Filtermatte (10) zumindest außenumfangsseitig ein Kunststoffgewebe und/oder ein Metalldrahtgewebe (22) aufweist und daß der die Filtermattenenden (14) zusammen mit dem jeweiligen Gewebe (22) umfassende Kunststoffclip (18) derart die Prägung erhält, daß diese in die Gewebestruktur des Gewebes (22) eingreift.

3. Filterelement nach Anspruch 2, **dadurch gekennzeichnet, daß** die Prägung aus rechteckförmigen, insbesondere quadratischen Prägeelementen besteht, die vorzugsweise der jeweiligen Gewebestruktur entsprechen.

4. Filterelement nach einem der Ansprüche 1 bis 3, **dadurch gekennzeichnet, daß** die Verbindungseinrichtung (16) aus einem Polyamid- oder Polyesterwerkstoff besteht.

5. Filterelement nach einem der Ansprüche 1 bis 4, **dadurch gekennzeichnet, daß** die Filtermatte (10) zick-zack-förmig gefaltet ist und einen Schichtaufbau hat und daß als Schichten (20) mindestens ein Polyestervlies und/oder eine Glasfasermatte und/oder ein Papiervlies und/oder ein Meltblownviies und/oder ein Edelstahlpolyester-Mischgewebe oder das Kunststoffgewebe und/oder das Metalldrahtgewebe (22) vorgesehen sind.

6. Filterelement nach einem der Ansprüche 1 bis 5, **dadurch gekennzeichnet, daß** das Verschweißen der Filtermattenenden (14) mit der Verbindungseinrichtung (16) über ein Ultraschall-Schweißverfahren erfolgt.

7. Filterelement nach einem der Ansprüche 1 bis 6, **dadurch gekennzeichnet, daß** die Filtermatte (10) sich innen- und/oder außenumfangsseitig an einem Stützrohr (12) abstützt.

8. Filterelement nach einem der Ansprüche 1 bis 7, **dadurch gekennzeichnet, daß** die Verbindungseinrichtung (16) in radialer Richtung der Filtermatte (10) entlang deren Außenumfang endet.

9. Vorrichtung zum Herstellen eines Filterelementes nach einem der Ansprüche 1 bis 8, **dadurch gekennzeichnet, daß** für den thermischen Schweißvorgang eine Ultraschall-Schweißeinrichtung (32) eingesetzt ist mit einer leistenförmigen Sonotrode (34) und einem leistenförmigen Amboß (36), die die Verbindungseinrichtung (16) mit den von ihr umfaßten Filtermattenenden (14) zwischen sich aufnehmen, und daß zumindest der Amboß (36) mit einer Prägeeinrichtung für die Prägung (30) zumindest eines Schenkels (24) der Verbindungseinrichtung (16) versehen ist.

## Claims

1. Tubular filter element for filtering fluids, comprising a filter mat (10) with ends (14) which face each other and are fixed in position by a connecting device (16) which at least partially overlaps the said ends (14), whereby the connecting device (16), made of a thermo-formed plastic, is welded to the ends (14) of the filter mat (10), whereby the connecting device (16), designed in the form of a connecting bar in the shape of a clip (18), is pushed onto the filter mat ends (14) holding them for a heat welding operation, and whereby the clip (18) becomes connected to the ends (14) of the filter mat, while incipiently fused without added material, **characterised in that** the plastic clip (18) is embossed in the thermal welding operation at least along one of its two sides (24) in such a way that the ends (14) of the filter mats are welded together in a compressed form.

2. Filter element according to Claim 1, **characterised in that** the filter mat (10) has plastic cloth and/or metal cloth (22) at least on the outside periphery and that the plastic clip (18) clasping the filter mat ends (14) together with the cloth (22) used is embossed to such a degree that the said clip enters the structure of the cloth (22).

3. Filter element according to Claim 2, **characterised in that** the embossing pattern consists of rectangular, particularly square depressions which preferably correspond to the structure of the given cloth.

4. Filter element according to one of the Claims 1 to 3, **characterised in that** the connecting device (16) is of polyamide or polyester.

5. Filter element according to one of the Claims 1 to 4, **characterised in that** the filter mat (10) is accordion-pleated, is built up in layers and at least an unwoven polyester cloth and/or a fibreglass mat and/or an unwoven paper cloth and/or a melt-blown cloth and/or the metal cloth (22) are used.

6. Filter element according to one of the Claims 1 to 5, **characterised in that** the filter mat ends (14) are welded together with the connecting device (16) by an ultrasonic welding process.

7. Filter element according to one of the Claims 1 to 6, **characterised in that** the filter mat (10) is supported inside and/or outside on a supporting tube (12).

8. Filter element according to one of the Claims 1 to 7, **characterised in that** the connecting device (16) ends in the radial direction of the filter mat (10) along its outside periphery.

9. Device for producing a filter element according to one of the Claims 1 to 8, **characterised in that** an ultrasonic welding device (32) with a bar-like sonotrode (34) and a bar-like anvil (36) is used, grasping the filter mat ends (14) between them, and that at least the anvil (36) is fitted with an embossing device for embossing (30) at least one side (24) of the connecting device (16).

## Revendications

1. Elément filtrant de forme tubulaire pour la filtration de fluides avec un corps de filtration (10), dont les extrémités dirigées l'une vers l'autre (14) sont fixées dans leur position par une pince d'assemblage (16), qui recouvre au moins partiellement les extrémités (14), la pince d'assemblage (16) se composant d'un matériau synthétique thermoformable étant soudée avec les extrémités (14) du corps de filtration 10, la pince d'assemblage (16) conçue comme barre de liaison et enfilée à la manière d'un clip (18) sur les extrémités du corps de filtration (14) maintenant celles-ci ensemble pour une opération de soudure thermique et le clip (18) fusionnant en état fondu et sans apport de soudure avec les extrémités du corps de filtration (14), **caractérisé en ce que**, lors de la soudure thermique, le clip en matériau synthétique (18) acquiert, au moins le long d'un de ses deux bras (24), une empreinte telle que les extrémités du corps de filtration (14) sont soudées entre elles d'une manière étanche.

2. Elément filtrant selon la revendication 1, **caractérisé en ce que** le corps de filtration (10) comprend au moins sur son pourtour extérieur un tissu en matière synthétique et/ou un tissu en fil métallique (22) et **en ce que** le clip en matériau synthétique (18) comprenant les extrémités de corps de filtration (14) en même temps que le tissu respectif (22) acquiert l'empreinte de telle manière que celle-ci pénètre dans la structure du tissu (22).

3. Elément filtrant selon la revendication 2, **caractérisé en ce que** l'empreinte se compose d'éléments d'empreinte de forme rectangulaire, en particulier carrée, qui correspondent de préférence à la structure de tissu respective.

4. Elément filtrant selon l'une des revendications 1 à 3, **caractérisé en ce que** la pince d'assemblage (16) est réalisée en un matériau se composant de polyamide ou de polyester.

5. Elément filtrant selon l'une des revendications 1 à 4, **caractérisé en ce que** le corps de filtration (10) est plié en accordéon et est constitué de couches et **en ce que** pour les couches (20) sont prévus au moins une nappe de fibres de polyester et/ou une nappe de fibres de verre et/ou une nappe de papier et/ou une nappe de fibres Meltblown et/ou un tissu mélangé d'acier fin et de polyester ou le tissu en matière synthétique et/ou le tissu en fil métallique (22).

6. Elément filtrant selon l'une des revendications 1 à 5, **caractérisé en ce que** la soudure des extrémités du corps de filtration (14) a lieu au moyen de la pince d'assemblage (16) par un procédé de soudure à ultrasons.

7. Elément filtrant selon l'une des revendications 1 à 6, **caractérisé en ce que** le corps de filtration (10) s'appuie sur le pourtour intérieur et/ou sur le pourtour extérieur sur un tube de soutien (12).

8. Elément filtrant selon l'une des revendications 1 à 7, **caractérisé en ce que** la pince d'assemblage (16) s'arrête en direction radiale du corps de filtration (10) le long du pourtour extérieur de celui-ci.

9. Dispositif pour produire un élément filtrant selon l'une des revendications 1 à 8, **caractérisé en ce que** pour l'opération de soudure thermique on utilise un dispositif de soudure à ultrasons (32) avec une sonotrode (34) ayant la forme d'une barre et une enclume (36) ayant la forme d'une barre, qui reçoivent entre elles la pince d'assemblage (16) avec les extrémités des corps de filtration saisies par elle et **en ce qu'**au moins l'enclume (36) est munie d'un dispositif d'empreinte pour appliquer une empreinte (30) à au moins une branche (24) de la pince d'assemblage (16).
